# EUROPEAN PATENT SPECIFICATION

(11) **EP 3 355 522 B1**
(45) Date of publication and mention of the grant of the patent: **03.04.2019**
(21) Application number: 17153327.6
(22) Date of filing: 26.01.2017
(51) Int. Cl.: H04L 12/28, H04L 12/709, H04L 12/46

(54) **ACCESS AGGREGATION SYSTEM AND BONDING CLIENT**
ZUGANGSAGGREGATIONSSYSTEM UND VERBINDUNGS-CLIENT
SYSTÈME D'AGRÉGATION D'ACCÈS ET CLIENT DE LIAISON

(43) Date of publication of application: 01.08.2018
(73) Proprietor: Deutsche Telekom AG, 53113 Bonn (DE)
(72) Inventor: BAYER, Nico, 61231 Bad Nauheim (DE); SIVCHENKO, Dmitry, 64331 Weiterstadt (DE)
(74) Representative: Patentship Patentanwaltsgesellschaft mbH

(56) References cited:
- EP-A1- 3 131 344
- EP-A2- 2 887 586

## Description

### TECHNICAL FIELD

The present disclosure relates to an access aggregation system with an access aggregation point (AAP) device and a bonding client and to an access aggregation method. In particular, the disclosure relates to a method and system for efficient packet transmission in networks with bundled channels.

### BACKGROUND

Nowadays, more products utilising channel bonding approaches are introduced and used on the market. Examples are the "Hybrid Access" product according to "http://www.telekom.de/privatkunden/zuhause/internet-und-fernsehen/das-ist-hybrid" or custom solutions, e.g. according to "https://www.viprinet.com/de".

The main goal of these products is to increase the available bandwidth for subscribers and to increase the reliability of data transfer. These goals are achieved by bonding resources of different access technologies into one access channel. Since different communication paths are used for data transfer, all these bonding solutions use tunnel-based approaches for data transfer between the bonding client (e.g. Hybrid Access Router in the Hybrid Access product) and the Access Aggregation Point installed in the network. Usage of tunnels for data transfer, however, increases the overhead in networks and the complexity of the implementation both on the bonding client and on the bonding access aggregation point.

In future networks, access aggregation points will become an inherent part of the network infrastructure. In such (converged) operator networks, bundling will be a feature natively supported by the network. The efficiency of packet transmission for bonding clients is very important for the overall network efficiency since more and more clients will use bonding in the future. Currently all bonding solutions use tunnels for packet transport between bonding client and an AAP. Although transport tunnels (e.g. IP-in-IP, TCP/UDP over IP, GRE or any other) can simplify solutions needed to be implemented in AAP and clients for packet scheduling, the efficiency of data transfer is negatively impacted due to additional overhead. One of the main problems with tunnel-based approaches is the usage of tunnels also for situations in which only one channel is available to the bonding client. In order to add potentially additional transfer channels the client uses tunnels even for one channel that is unnecessary and very inefficient.

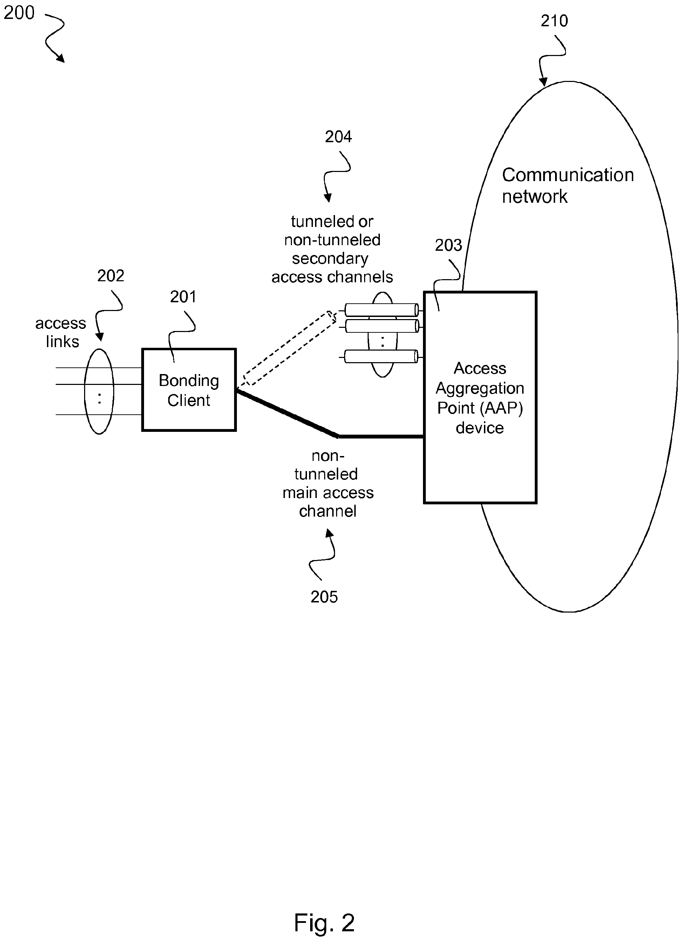

Document EP 3 131 344 A1, forming prior art under Article 54(3) EPC, relates to a method for discovery of Access Aggregation points (AAP) in a network comprising two bonding clients 5, 6 and one or more AAP nodes 11, 12, 13 (see Figure 2) to provide access aggregation point functionality to the bonding clients 5, 6. In the network, different links are arranged between the bonding clients 5, 6 and the AAP nodes 11, 12, 13 to obtain the AAP functionality.

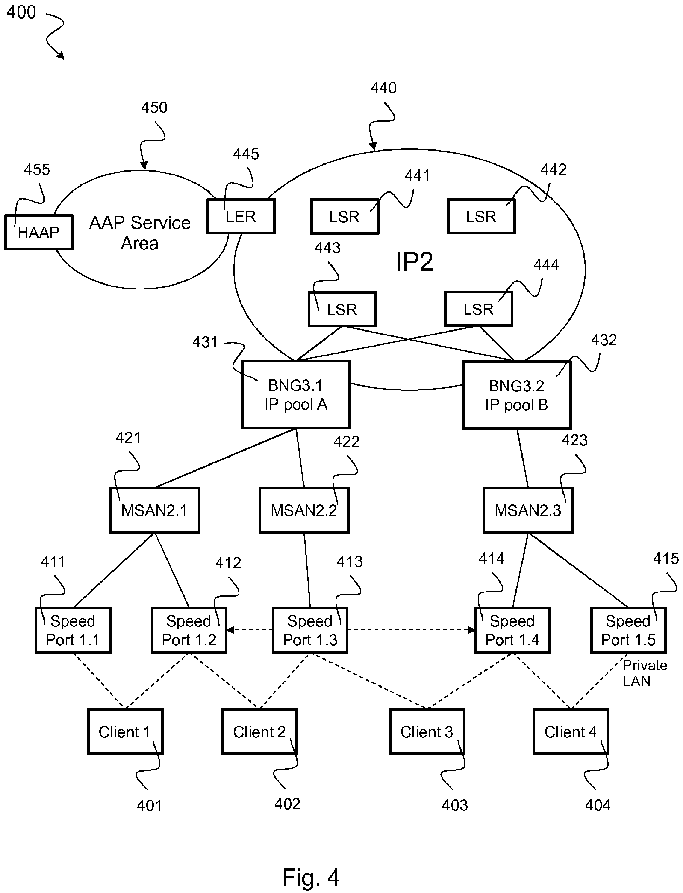

Document EP 2 887 586 A2 relates to a system for bonding connections to the internet comprising a first access device 43 and a second access device 44 and a bonding server 42 (see Figure 4). The first access device 43 provides a first connection 45 for a first computer 432 via the first access device 432 to the internet 411. The second access device 44 provides a second connection 46 for a second computer 442 via the second access device 44 to the internet 411. The first and the second access devices 43, 44 are connected to each other via a peer-connection 47.

### SUMMARY

It is the object of the invention to provide a concept for an efficient transmission of data packets between the bonding client and the Access Aggregation Point (AAP).

This object is achieved by the features of the independent claims. Further implementation forms are apparent from the dependent claims, the description and the figures.

A basic concept of the invention is to use a transport tunnel between bonding client and AAP only in necessary cases and to avoid tunnel usage in most situations. From the multiple paths available to the bonding client one path can be selected to be the main path. On the main path no tunnel will be used. Additional paths may need tunnels or similar solutions, depending on the scenario. Avoiding a tunnel on the main path has the very important advantage that in case only one path is available - no bundling - that no overhead and additional delay due to tunnels is added. This approach also allows seamlessly switching between bundling and non-bundling mode, meaning the bonding client can enable the bundling simply by adding additional paths without affecting the main path.

Based on AAP discovery process in operator networks with integrated AAPs (e.g. using discovery protocol) and AAP selection the following information may be known on AAP and bonding clients: For AAP: Bonding client ID and Public IP addresses to be used for data communication with the bonding client; For Bonding client: AAP identity and its IP address and Public IP addresses as known to the selected AAP. Based on this knowledge the system can decide which of the paths to be the main path and whether to use any transport tunnels for data transfer on the additional paths. The decision about the main path as well as how to communicate this decision between the bonding client and AAP is out of scope of this document.

In order to describe the invention in detail, the following terms, abbreviations and notations will be used:
- UE:: user equipment, user device
- AP:: access point
- AAP:: access aggregation point
- AN:: access node
- ID:: identifier
- IP:: Internet protocol
- L1:: layer 1 (physical layer)
- L2:: layer 2 (data link layer)
- L3:: layer 3 (network layer)
- BNG:: broadband network gateway
- MSAN:: multi-service access node
- LSR:: label switch router
- HAAP:: hybrid access aggregation point
- NAT:: network address translation
- 5G:: fifth generation mobile network
- LTE:: Long Term Evolution

The communication systems, devices and methods described in the following may be based on bonding access links to one access channel, e.g. by using bonding servers. In fixed access networks for example, the data rates achievable by DSL depend on the length of the copper line between the residential gateway and the street cabinet or the central office. Very often the users are disappointed if they only get a data rate of a few Mbit/s. One approach to solve the situation is bonding of multiple DSL-lines. The data is distributed to several DSL-links by a gateway or similar device at the user side and encryptedly transferred by use of virtual private networks (VPN) to an entity in the network or at a remote location. There, the data are assembled to the original stream. In the opposite direction the method operates accordingly.

The connection can be a DSL connection, as for example xDSL like ADSL or VDSL. However, the connection is not limited to DSL but can also be any other broadband connection, in particular cable internet access, Wi-Fi-to-the-home or the like. Bundling can be performed for any fixed wired access technology and for any non-fixed, wireless access technology, e.g. 3G, 4G or 5G mobile networks or the like. The transfer or rather the corresponding split of the data over the bonding connections can be session based, flow based and/or IP packet based. On the user side, bundling can be performed, e.g. by using an access device such as an integrated access device (IAD). An integrated access device can for example be a DSL modem, a home gateway and/or a residential gateway.

The communication systems, devices and methods described in the following may use AAP devices. Access aggregation point devices are the means by which connections are provided among multiple technologies such as DSL, cable, Ethernet and wireless devices that are connected to corporate virtual private networks (VPNs), wide area networks and the Internet. Subscriber demand for high-speed services require the delivery of IP services regardless of the access medium. AAP devices are used to provide flexible and reliable configurations for diverse consumer needs supporting provision of millions of sessions.

Bundling methods as described in the following may be based on tunneling protocols and non-tunneling protocols as described in the following. One of the most important considerations in setting up a communication network is encapsulation and tunneling. The tunneled protocol, that is be encapsulated, includes one or more headers that can be used to identify different tunnels between a pair of devices and ultimately deliver the payload to a remote peer. Tunneling protocols can be applied to protocols operating at the same layer of the Open Systems Interconnection (OSI) model or at different layers. A wide range of applications can be derived from various tunneling protocols, such as connecting isolated network segments, Layer 2 transport, security, and controlling routing behavior. Tunneling protocols may include protocols such as Layer 2 Tunneling Protocol (L2TP), PPP over Ethernet (PPPoE) and its variants, PPP over ATM (PPPoA), etc. L2TP is an International Engineering Task Force (IETF) standard that combines aspects of two existing tunneling protocols: Layer 2 Forwarding (L2F) and Point-to-Point Tunneling Protocol (PPTP). The main component of L2TP is a reliable control channel that is responsible for session setup, negotiation, and teardown, and a forwarding plane that adds negotiated session IDs and forwards traffic. Layer 2 circuits terminate in a device called an L2TP access concentrator (LAC), and the PPP sessions terminate in an L2TP network server (LNS). The LNS authenticates the user and is the endpoint for PPP negotiation. PPP over Ethernet (PPPoE) provides the ability to connect hosts on a network over a simple bridging device to a remote aggregation concentrator. PPPoEoE is a variant of PPPoE where the Layer 2 transport protocol is now Ethernet or 802.1q VLAN instead of ATM. With PPP over ATM (PPPoA), a customer premises equipment (CPE) device encapsulates the PPP session based on RFC 1483 for transport across a DSLAM (digital subscriber line access multiplex). A non-tunneled protocol is a tunnelless or tunnel-free protocol, i.e. a protocol that is not using a tunnel, e.g. a tunnel as described above, for data transmission.

According to a first aspect, the invention relates to an access aggregation system, comprising: an access aggregation point (AAP) device, configured to terminate a main access channel and a plurality of secondary access channels towards a communication network, wherein the AAP device is configured to terminate the main access channel; and a bonding client, configured to bond a plurality of access links of at least one user device for data packet transport between the bonding client and the AAP device, wherein the bonding client is configured to use the main access channel and to select whether to use any from the secondary access channels for the data packet transport to the AAP device, wherein the bonding client is configured to establish the main access channel between the bonding client and the AAP device that is not based on a tunnel between the bonding client and the AAP device before establishing the plurality of secondary access channels between the bonding client and the AAP device that are based on a tunnel or based on no tunnel between the bonding client and the AAP device based on a decision if secondary channels are necessary.

Such an access aggregation system efficiently transmits data packets between the bonding client and the AAP, as the main access channel is based on non-tunneled data packet transport which saves resources because no complex tunneling protocol has to be applied and no additional data header has to be inserted in the data packets.

Such access aggregation system provides the advantage that the main access channel is established before establishing the secondary access channels, and hence, a transport tunnel is used between bonding client and AAP only in necessary cases. Thus tunnel usage can be avoided in most situations. On the main access channel no tunnel will be used. Further secondary access channels may be installed in which tunnels or no tunnels may be applied depending on the scenario. Avoiding a tunnel on the main access channel has the very important advantage that in case only one path is available, i.e. no bundling is performed, no overhead and additional delay due to tunnels is added.

In an implementation form of the access aggregation system, the bonding client is configured to establish the secondary access channels without affecting the main access channel.

This provides the advantage that the bonding client can efficiently and flexibly enable the bundling simply by adding additional paths without affecting the main path.

In an implementation form of the access aggregation system, the bonding client is configured to switch between non-bundling mode in which only the main access channel is established and bundling mode in which at least one of the secondary access channels is established.

This provides the advantage that seamless switching can be performed between bundling and non-bundling mode.

In an implementation form of the access aggregation system, the bonding client is configured to establish in the non-bundling mode only the main access channel for non-tunneled data packet transport.

This provides the advantage that no tunnel has to be established which saves resources. No additional data headers are required which saves memory and delay.

In an implementation form of the access aggregation system, the bonding client is configured to select the main access channel and whether to establish any from the secondary access channels based on an AAP discovery process.

This provides the advantage that both main access channel and secondary access channel(s) can be flexibly provided and dynamically switched. An AAP discovery process may be performed on-the-fly or upon demand or periodically in order to discover the network parameters required for the access aggregation.

In an implementation form of the access aggregation system, the bonding client is configured to: transmit a plurality of AAP discovery messages over a plurality of network links towards the AAP device, receive a plurality of AAP reply messages in response to the transmitted AAP discovery messages, and select the main access channel and whether to use any from the secondary access channels based on information comprised in at least one of the received AAP reply messages.

This provides the advantage that the network between the bonding client and the AAP device can be simply discovered by sending such AAP discovery messages and the results from this discovery can be used to select an optimum main access channel and to decide if further secondary access channels are necessary.

In an implementation form of the access aggregation system, each of the AAP discovery messages comprises: an identifier of the bonding client, a network address of the bonding client, and a unique identifier of the network link via which the respective AAP discovery message is transmitted.

This provides the advantage that structural information of the network between the bonding client and the AAP device can be easily evaluated by the AAP device when the AAP discovery messages include information of the network link via which they were transmitted. The AAP device may derive for example a delay of the different links via which the AAP discovery messages were sent and include this information in the AAP reply messages to inform the bonding client about the different possible routes.

In an implementation form of the access aggregation system, the AAP device is configured to: receive at least one of the AAP discovery messages transmitted by the bonding client, and transmit an AAP reply message to the bonding client, wherein the AAP reply message comprises the identifier of the bonding client, a data structure comprising information about the at least one AAP discovery message received by the AAP device and an identifier of the AAP device.

This provides the advantage that the bonding client receives by the AAP reply messages information about a network topology or structure of the network between bonding client and AAP device and can select an optimum main access channel and, if necessary, further optimum secondary access channels for data packet transmission.

In an implementation form, the access aggregation system comprises: a first access network coupled via a first access link to the bonding client; a second access network coupled via a second access link to the bonding client; and a transport network connecting the first access network and the second access network to the communication network, wherein data packets sent from the bonding client towards the communication network traverse the AAP device.

This provides the advantage that an in-path AAP can be applied. This provides the advantage that the traditional routing mechanism of the Internet suite can be applied as IP packets sent from the bonding client towards the Internet traverse the AAP. Due to the knowledge of all IP addresses which can be used for packet transport on the client, the AAP knows about all IP addresses of the client which may be used for additional secondary access channels after selection of the main access channel.

In an implementation form of the access aggregation system, the AAP device is configured to forward IP packets received via the main access channel based on their source IP address without any modifications of packet content and to forward IP packets received via one of the secondary access channels based on network address translation (NAT) applied to their source IP address.

This provides the advantage that even for a client having multiple private IP addresses only one IP address of the client is seen by the corresponding node, which is the IP address of the main access channel.

In an implementation form of the access aggregation system, the AAP device is implemented as a virtual function of a network node comprised in the transport network.

This provides the advantage that the access aggregation system can be efficiently applied in slice-based communication networks using virtual functions, logical networks and network slices such as next generation mobile networks (NGMN), e.g. 5G mobile networks.

In an implementation form, the access aggregation system comprises a third access network coupled via a fourth access link to a second bonding client; a second transport network connecting the third access network to the communication network, wherein the second bonding client is configured to change a route of data packets sent by the second bonding client towards the communication network such that data packets which are not traversing the AAP device are changed in data packets traversing the AAP device.

This provides the advantage that the AAP device can be flexibly located in any network node as a wrong route or unknown route to the AAP device is resolved by the bonding client (or second bonding client).

In an implementation form of the access aggregation system the bonding client is configured to add a unique identifier of the bonding client into a data packet transported from the bonding client towards the AAP device.

This provides the advantage that packets from different bonding clients can be detected and correctly routed by the AAP device. In this way, the scenario of multiple bonding clients behind the same access node seen to AAP with only one IP address can be supported.

According to a second aspect, the invention relates to a bonding client, comprising: a plurality of access links towards at least one user device for data packet transport; a network interface towards an access aggregation point (AAP) device configured to terminate a main access channel and a plurality of secondary access channels towards a communication network; and a processor, configured to bond the plurality of access links for data packet transport between the bonding client and the AAP device via the network interface, wherein the processor is configured to use the main access channel and to select whether to use any from the secondary access channels for the data packet transport to the AAP device, wherein the bonding client is configured to establish the main access channel between the bonding client and the AAP device that is not based on a tunnel between the bonding client and the AAP device before establishing the plurality of secondary access channels between the bonding client and the AAP device that are based on a tunnel or based on no tunnel between the bonding client and the AAP device based on a decision if secondary channels are necessary.

Such a bonding client efficiently transceives data packets to/from the AAP, as the main access channel is based on non-tunneled data packet transport which saves resources because no complex tunneling protocol has to be applied and no additional data header has to be inserted in the data packets.

Such a bonding client provides the advantage that the main access channel is established before establishing the secondary access channels, and hence, a transport tunnel is used between bonding client and AAP only in necessary cases. Thus tunnel usage can be avoided in most situations. On the main access channel no tunnel will be used. Further secondary access channels may be installed in which tunnels or no tunnels may be applied depending on the scenario. Avoiding a tunnel on the main access channel has the very important advantage that in case only one path is available, i.e. no bundling is performed, no overhead and additional delay due to tunnels is added.

According to a third aspect, the invention relates to an access aggregation method, comprising: terminating, by an access aggregation point (AAP) device, a main access channel and a plurality of secondary access channels towards a communication network; bonding, by a bonding client, a plurality of access links of at least one user device for data packet transport between the bonding client and the AAP device, using the main access channel and selecting whether to use any from the secondary access channels for the data packet transport to the AAP device, and establishing the main access channel between the bonding client and the AAP device that is not based on a tunnel between the bonding client and the AAP device before establishing the plurality of secondary access channels between the bonding client and the AAP device) that are based on a tunnel or based on no tunnel between the bonding client and the AAP device based on a decision if secondary channels are necessary.

Such an access aggregation method provides efficient means for transmitting data packets between a bonding client and an AAP, as the main access channel is based on non-tunneled data packet transport which saves resources because no complex tunneling protocol has to be applied and no additional data header has to be inserted in the data packets.

### BRIEF DESCRIPTION OF THE DRAWINGS

Further embodiments of the invention will be described with respect to the following figures, in which:
Fig. 1 shows a schematic diagram of a communication network 100 illustrating the general principle of bonding solutions according to the disclosure.
Fig. 2 shows a schematic diagram illustrating an access aggregation system 200 according to the disclosure.
Fig. 3 shows a schematic diagram of a communication network 300 for illustrating different bonding scenarios according to the disclosure.
Fig. 4 shows a block diagram illustrating an exemplary fixed access network 400 according to an implementation.
Fig. 5 shows a schematic diagram illustrating an access aggregation method 500 according to the disclosure.

### DETAILED DESCRIPTION OF EMBODIMENTS

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

The access aggregation system as described hereinafter may include a plurality of different network entities or network nodes. A network entity or a network node may be a computer host or a computer server. A network entity or network node may be a hardware unit, e.g. a computer server, a network device, a PC, a tablet, a smartphone, a router, a gateway or a whole computer network. A network entity or a network node may be a software unit, e.g. an application program or software module on a PC, tablet, smartphone or any other hardware device.

The access aggregation system may be implemented by various technologies, in particular utilizing communication networks based on mobile communication standards such as LTE, in particular LTE-A and/or OFDM and successor standards such as 5G or alternatively or additionally based on fixed networks such as DSL access networks, ISDN POTS, etc. The components and network nodes of such an access aggregation system may be implemented as electronic devices or electronic network entities. The described devices and network entities may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

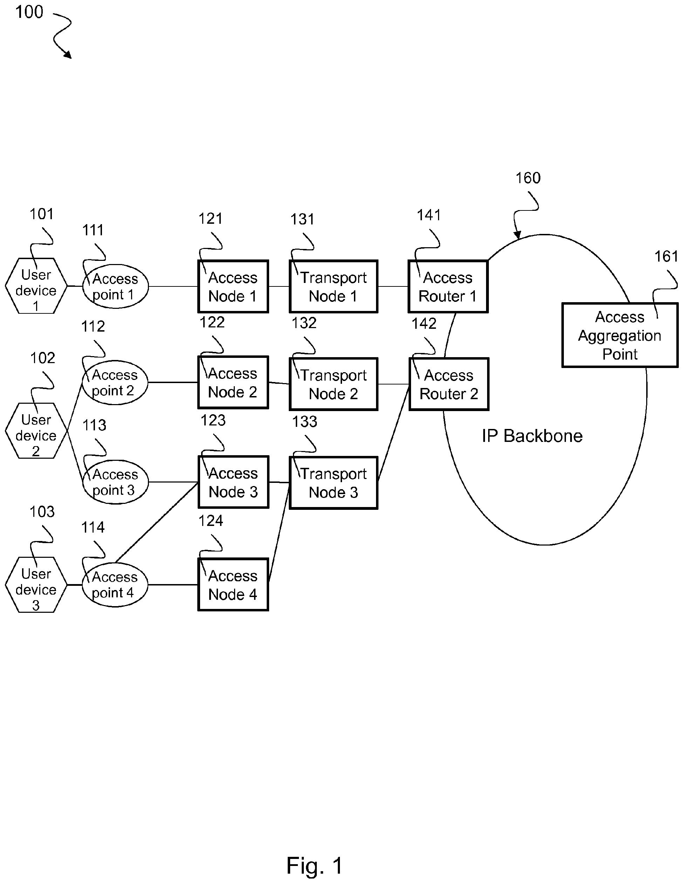

Fig. 1 shows a schematic diagram of a communication network 100 illustrating the general principle of bonding solutions according to the disclosure. The communication network 100 includes a plurality of user devices 101, 102, 103 which are connected to a plurality of access points 111, 112, 113, 114 which are connected to a plurality of access nodes 121, 122, 123, 124 which are connected to a plurality of transport nodes 131, 132, 133 which are connected to an exemplary number of two access routers 141, 142 providing routing functionality in an IP backbone network 160. In the IP backbone network 160 an access aggregation point (AAP) device 161 is arranged.

Fig. 1 shows three different bundling scenarios. In a first scenario bundling is performed on behalf of user device 1 (101) by access point 1 (111). Access point 1 (111) bundles the resources of his own backbone link with the resources of the access point 2 (112) backbone link. The connection between access point 1 (111) and access point 2 (112) can for instance be done using Wi-Fi links. In a second scenario the user device 2 (102) itself is performing access bundling. The device 102 bundles the resources of the link with access point 2 (112) and access point 3 (113). In a third scenario, access point 4 (114) is performing the bundling on behalf of the user (user device 3, 103). In this case the access point 114 bundles the resources of two different backbone links, i.e. link to access node 3 (123) and link to access node 4 (124). Usually, these scenarios do not appear isolated from each other but mixed scenarios are possible.

For the bonding functionality of any of these approaches an additional device is required in the IP network - Access Aggregation Point (AAP) 161. The AAP 161 terminates connections from bonding clients (e.g. access points 111, 112, 113, 114 or user devices 101, 102, 103) and performs necessary functionalities to recover streams of packets received over different ways (e.g. recover packet reordering). Additionally, the AAP 161 may perform packet scheduling for the downlink direction, i.e. from the network towards users.

Fig. 2 shows a schematic diagram illustrating an access aggregation system 200 according to the disclosure. Figure 2 illustrates the main concept of the invention, that is, to use a transport tunnel between bonding client 201 and AAP 203 only in necessary cases and to avoid tunnel usage in most situations. From the multiple paths (also referred to as channels) available to the bonding client 201 one path (or channel) is selected to be the main access channel 205. On the main access channel 205 no tunnel will be used. Additional secondary access channels 204 may need tunnels or similar solutions or can be non-tunneled, depending on the scenario. Avoiding a tunnel on the main access channel 205 has the very important advantage that in case only one path is available - i.e. no bundling - that no overhead and no additional delay due to tunnel creation is added. This approach also allows to seamless switch between bundling and non-bundling mode, meaning the bonding client 201 can enable the bundling simply by adding additional secondary paths 204 without affecting the main path 205.

The bonding client 201 and/or the AAP device 203 can decide, e.g. by using information of an AAP discovery protocol, which of the paths to be the main path 205 and whether to use any transport tunnels for data transfer on the additional secondary paths 204. The AAP discovery protocol can be performed by the bonding client 201 and/or the AAP device 203 and provides the following information: For the AAP 203: Bonding client ID and/or public IP addresses to be used for data communication with the bonding client 201. For the bonding client 201: AAP identity and its IP address; and public IP addresses as known to the selected AAP 203.

In the following, an exemplary AAP discovery protocol is described. The AAP discovery protocol is used for the discovery of suitable AAP nodes to provide bonding functionality in an operator network. AAP discovery messages, e.g. multicast AAP discovery messages are sent by the bonding client 201 for the discovery of AAP nodes in the operator network, e.g. to find a suitable AAP device 203. These AAP discovery messages are sent by the bonding client 201 over all available links which are intended to be used for bonding. All access nodes in the operator network which may provide AAP functionality, i.e. the AAP nodes, are joined to a pre-defined and well known multicast IP address. In this way only these AAP nodes will receive the AAP discovery messages.

The AAP nodes within the network will receive a multitude of the AAP discovery messages from the same bonding client 201. The AAP nodes may be realized as routers, gateways or other devices being enabled with the AAP functionality within a transport network. Upon this event the AAP nodes will reply using an AAP reply message.

The bonding client 201 will receive one or several of AAP reply messages and will be able to reconstruct the logical nework topology, in particular the location of cross over nodes, based on the information contained in the one or several of AAP reply messages.

The AAP discovery messages may include at least one of the following: a unique ID of the bonding client 201, an IP address used to send the message, a unique ID of the AAP discovery message being sent via a respective link, and a data structure comprising unique information about the AAP discovery messages being sent over at least two available links from the bonding client 201.

The AAP reply message may comprise at least one of the following: the unique ID of the bonding client, preferably being copied from the discovery message, and data structured comprising unique information about the AAP discovery message(s), preferably being copied from the discovery message(s) received at the respective AAP node, and a unique ID of the respective AAP node, preferably a unique ID of an identified cross over node. The AAP device 203 is one of such AAP nodes, other AAP nodes may be arranged in the communication network 210.

The bonding client 201 may determine the location of at least one suitable access aggregation point, e.g. the AAP device 203 depicted in Fig. 2, based on the received AAP reply message(s), preferably at the loacation of the AAP node which is a cross over node.

The access aggregation system 200 shown in Figure 2 includes an AAP device 203 and a bonding client 201. The AAP device 203 is configured to terminate a main access channel 205 and a plurality of secondary access channels 204 towards a communication network 210. The main access channel 204 is based on non-tunneled data packet transport and each of the secondary access channels 204 is based on tunneled or non-tunneled data packet transport. The bonding client 201 is configured to bond a plurality of access links 202 of at least one user device for data packet transport between the bonding client 201 and the AAP device 203. The bonding client 201 is further configured to use the main access channel 205 and to select whether to use any from the secondary access channels 204 for the data packet transport to the AAP device 203.

The bonding client 201 may establish the main access channel 205 towards the AAP device 203 before establishing the plurality of secondary access channels 204 towards the AAP device 203.

The bonding client 201 may establish the secondary access channels 204 without affecting the main access channel 205. The bonding client 201 may switch between non-bundling mode in which only the main access channel 205 is established and bundling mode in which at least one of the secondary access channels 204 is additionally established. The bonding client 201 may establish in the non-bundling mode only the main access channel 205 for non-tunneled data packet transport.

The bonding client 201 may select the main access channel 205 and whether to establish any from the secondary access channels 204 based on an AAP discovery process. The bonding client 201 may be configured to: transmit a plurality of AAP discovery messages over a plurality of network links towards the AAP device 203, receive a plurality of AAP reply messages in response to the transmitted AAP discovery messages, and select the main access channel 205 and whether to use any from the secondary access channels 204 based on information comprised in at least one of the received AAP reply messages. Each of the AAP discovery messages may include: an identifier, e.g. a physical address such as a MAC address of the bonding client 201, a network address, e.g. an IP address of the bonding client 201, and a unique identifier of the network link via which the respective AAP discovery message is transmitted.

The AAP device 203 may be configured to: receive at least one of the AAP discovery messages transmitted by the bonding client 201, and transmit an AAP reply message to the bonding client 201. The AAP reply message may include the identifier of the bonding client 201, a data structure comprising information about the at least one AAP discovery message received by the AAP device 203 and an identifier of the AAP device 203.

The bonding client 201 shown in Fig. 2 may include a plurality of access links 202 towards a user device for data packet transport; a network interface towards the AAP device 203 and a processor. The network interface is configured to terminate a main access channel 205 and a plurality of secondary access channels 204 towards a communication network 210. The main access channel 205 is based on non-tunneled data packet transport and any of the secondary access channels 204 is based on tunneled or non-tunneled data packet transport.

The processor is configured to bond the plurality of access links 202 for data packet transport between the bonding client 201 and the AAP device 203 via the network interface. The processor is further configured to use the main access channel 205 and to select whether to use any from the secondary access channels 204 for the data packet transport to the AAP device 203.

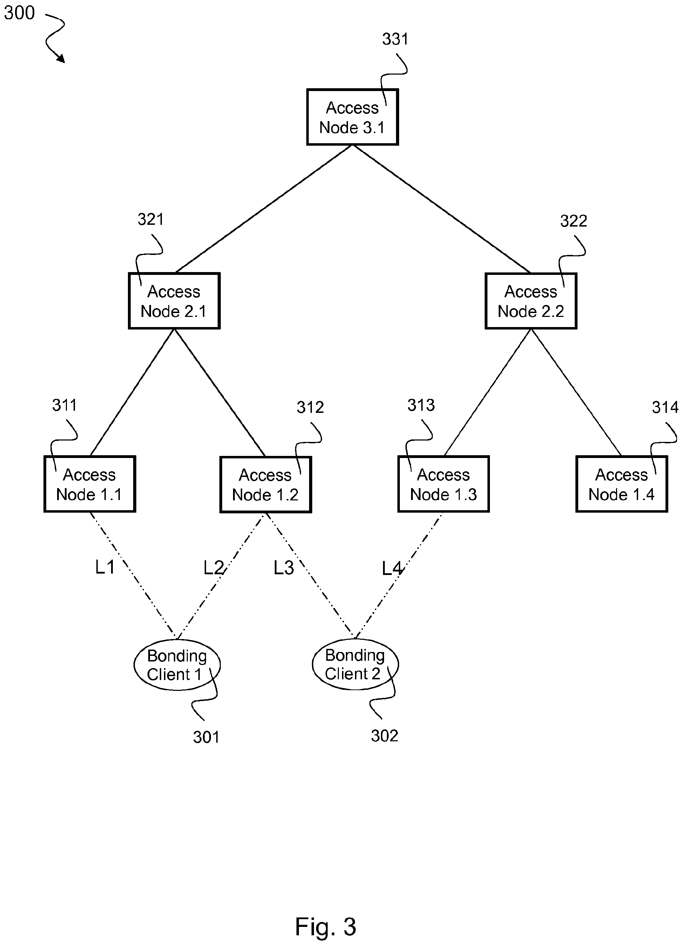

The decision logic about the usage of tunnels or not on the additional paths depends on the scenario. Some important scenarios are shown in Fig. 3 and described in the following.

Fig. 3 shows a schematic diagram of a communication network 300 for illustrating different bonding scenarios according to the disclosure. The communication network 300 includes multiple access nodes that can be arranged to form a network tree. The network tree includes a lower layer of access nodes 311, 312, 313, 314, a medium layer of access nodes 321, 322 and a top access node 331. A first bonding client 301 and a second bonding client 302 may be connected to any one of the lower layer of access nodes, i.e. access node 1.1 (311), access node 1.2 (312), access node 1.3 (313) and access node 1.4 (314). Acess node 1.1 (311) and access node 1.2 (312) may be connected with access node 2.1 (321). Acess node 1.3 (313) and access node 1.4 (314) may be connected with access node 2.2 (322). Acess node 2.1 (321) and access node 2.2 (322) may be connected with access node 3.1 (331).

In the following, a first scenario is described in which a bonding client has two public IP addresses and an in-path AAP has been selected. The bonding client may be bonding client 301 that may correspond to bonding client 201 described above with respect to Fig. 2 and the AAP may correspond to AAP device 203 as described above with respect to Fig. 2. This use case can be for instance a mobile device connected to cellular network and a Wi-Fi network both with IPv6 support and connected to the same transport network. Another example can be the bundling scenario as described by European Patent Application EP 2 887 586 A2 "A system and a method for bonding connections of an access device" with IPv6 support.

In this scenario multiple channels do exist between AAP and the bonding client. The AAP is in-path meaning that by using the traditional routing mechanism IP packets sent from the bonding client towards the Internet traverse the AAP. One of the available paths is selected as the "main" transport path. Due to the knowledge of all IP addresses which can be used for packet transport on the client, the AAP knows about all IP addresses of the client which may be used for additional communication paths after selection of the main path. For example, the bonding client 1 (301) in Figure 3 has two links (L1, L2) into the network 300 with IP addresses from AN1.1 (311) and AN1.2 (312). Public IP addresses available on the client are known to the selected AAP which may be collocated with Access Node 2.1 (321). For bonding, the client 301 may send IP packets over two links, e.g. L1 and L2, without usage of any tunneling mechanism. AAP gets IP packets from bonding client 301 and forwards them further towards the destination. In case only one channel is used by the client 301 the communication generally does not differ from a traditional IP communication. In case two or more channels are used, the AAP selects one of them as the "main" (access) channel, i.e. main access channel 205 as described above with respect to Fig. 1 that is necessary for unique IP address of the client 301 towards corresponding nodes. Due to the knowledge of IP addresses for additional paths, AAP applies NAT (network address translation) for uplink packets from the bonding client 301 in the case the source IP is the IP of the client 301 from its additional paths. The IP address of the main path may be used for the source NAT. In result, only one IP address of the client 301 is seen by the corresponding node, that is, the IP address of the main path. In the downlink direction the AAP performs the same operation and distributes received packets from corresponding nodes over communication channels used by the client 301. No tunnel is also used in the downlink direction since all used IP addresses of the client 301 are terminated on the client 301 itself.

In the following, a second scenario is described in which the bonding client has two public IP addresses and an out-of-path AAP has been selected. The bonding client may be first bonding client 301 or second bonding client 302 which may correspond to bonding client 201 described above with respect to Fig. 2 and the AAP may correspond to AAP device 203 as described above with respect to Fig. 2.

In this scenario multiple channels do exist between AAP and the bonding client 301. The AAP is out-of-path meaning that not all routes from the bonding client 301 towards the Internet are passing through the AAP. For those paths not passing through the AAP a transport tunnel or a similar solution to change the route of packets is required. For the example of bonding client 2 (302) in Figure 3 the bonding client 302 has two links (L3, L4) into the network with IP addresses from AN1.2, 312 and AN1.3, 313. The AAP may be collocated with Access Node 2.1, 321. This means that path L3 is in-path and L4 is out-of-path with the AAP. Transport of data packets on the main path and on all in-path paths may be done according to above described scenario 1, i.e. L3 in this example. All paths that are out-of-path with the AAP, i.e. L4 in this example may need some sort of re-routing in order to make the packets pass the AAP. This may be done by using simple tunnels (stateless and without security features) or the IPv6 routing header option. For uplink traffic the AAP may remove the overhead introduced by the re-routing, e.g. may remove the tunnel headers and may perform NAT as described above. For the downlink the bonding client 302 may remove the re-routing overhead.

In the following, a third scenario is described in which the bonding client has at least one shared public IP address. The bonding client may be first bonding client 301 or second bonding client 302 which may correspond to bonding client 201 described above with respect to Fig. 2 and the AAP may correspond to AAP device 203 as described above with respect to Fig. 2.

In this scenario the bonding client has at least one interface with a private IP address. This private IP address is at some point translated into a public IP address (e.g. by using NAT) and the public IP address may be shared with other clients behind the same NAT router. An example can be a Wi-Fi connected via DSL in which the DSL routers share one public IP address among multiple clients within the home network. The problem with this scenario is that the AAP may have problems identifying which packets belong to a bundling session and which packets do not as multiple clients are hidden behind one and the same public IP address. For example shown in Figure 3 such a scenario can be: Considered bonding client 1, 301 with: Public IP over link L1 and Private IP over link L2; Client 2, 302 having private IP over link L3.

By applying the same logic as in scenario 1 or 2 described above, the AAP can also perform NAT for IP packets of client 2, 302 sent to a destination in the Internet and traversing the AAP used for client 1, 301. To avoid this problem, additional information transmitted from the bonding client to the AAP can be used. Such additional information may for example only be needed in the uplink direction from the client 302 to the AAP. In the reverse direction the traditional NAT mechanism applied in the access node spreading private IP addresses may be enough to deliver packets to the bonding client 302. The additional information in the uplink can be transferred e.g. by using additional GRE header or IPv6 hop-by-hop extension header. The unique identifier of the bonding client 302 may be transferred to the AAP in the data packet. Since the AAP may have knowledge about client ID, all its public IP addresses and also about the selected IP for the main path, the AAP can be able to map the received information to the specific bonding client 302. After that the NAT with the correct source IP address used also over the main path from the client 302 can be done by the AAP. The information with the client ID may be deleted from the data packet and then it may be forwarded further towards the destination. Multiple bonding clients, e.g. 301, 302 behind the same access node, e.g. 312 seen to AAP with only one IP address can be supported in this way.

Apart from the scenarios described above, in case that for none of the available paths an in-path AAP can be found, the system may fall back to traditional over the top bundling with tunneling over all of the interfaces to an AAP with a public IP address.

With respect to the communication network 300 depicted in Fig. 3, the access aggregation system may include a first access network, e.g. formed by access node 1.1, 311 coupled via a first access link L1 to the bonding client 301. The access aggregation system may further include a second access network, e.g. formed by access node 1.2, 312 coupled via a second access link L2 to the bonding client 301. The access aggregation system may further include a transport network, e.g. formed by access node 2.1, 321 connecting the first access network 311 and the second access network 312 to the communication network, e.g. formed by access node 3.1, 331. Data packets sent from the bonding client 301 towards the communication network 331 may traverse the AAP device according to the above described first scenario.

The AAP device, e.g. AAP device 203 according to Fig. 2, may be configured to select the main channel, e.g. main access channel 205 according to Fig. 2, and the additional channel, e.g. one of the secondary access channels 204 according to Fig. 2, based on data packets sent from the bonding client 301 over the first access link L1 and the second access link L2 towards the communication network 331.

The AAP device 203 may be configured to forward IP packets received via the main access channel 205 based on their source IP address and to forward IP packets received via one of the secondary access channels 204 based on network address translation, NAT applied to their source IP address, e.g. according to the above described first scenario.

The AAP device 203 may be implemented as a virtual function of a network node comprised in the transport network 321.

With respect to the above described second scenario, the access aggregation system 300 may include a third access network, e.g. access node 3.1, 313 coupled via a fourth access link L4 to a second bonding client 302; and a second transport network 322 connecting the third access network 313 to the communication network 331. The second bonding client 302 may be configured to change a route of data packets sent by the second bonding client 302 towards the communication network 331 such that data packets which are not traversing the AAP device 203 are changed in data packets traversing the AAP device 203.

With respect to the above described third scenario, the bonding client 301, 302 may be configured to add a unique identifier of the bonding client into a data packet transported from the bonding client 301, 302 towards the AAP device 203.

Fig. 4 shows a block diagram illustrating an exemplary fixed access network 400 according to an implementation. The fixed access network 400 may be an implementation of the acces aggregation system 200 described above with respect to Fig. 2 or the communication network 300 described above with respect to Fig. 3. The access network may particularly correspond to a fixed access network of Deutsche Telekom.

The access network 400 includes multiple network nodes that can be arranged to form a network tree. The network tree includes a lower layer of network ports (SpeedPorts) 411, 412, 413, 414, 415 connecting clients 401, 402, 403, 404, e.g. via private LANs, a medium layer of MSANS 421, 422, 423 connecting the SpeedPorts 411, 412, 413, 414, 415 and a higher layer of BNGs 431, 432 connecting the MSANs 421, 422, 423 to an IP backbone network (IP2) 440. The IP backbone network 440 includes a plurality of LSRs 441, 442, 443, 444 and a network node 445 referred to as LER for providing a connection to an AAP service area 450 which is connected by HAAP 455 providing connection to the Internet or any other wide area network (WAN).

The access network 400 includes L2 Multi-Service Access Nodes (MSAN) 421, 422, 423 connected to Broadband Network Gateways (BNG) 431, 432. BNGs are connected to Label Switch Routers (LSR) 443, 444 in the IP backbone 440. Speedports 411, 412, 413, 414 and 415 are connected to MSANs 421, 422, 423 and establish PPPoE sessions with BNG 431, 432. Every Speedport 411, 412, 413, 414 and 415 receives a public IPv4 address as well as a routable IPv6 prefix.

Furthermore, a Hybrid Access Aggregation Point (HAAP) 455 is present in the network 400 that enables fallback to a traditional bonding scenario anytime. Implementing AAP in BNG3.1, 431, the concepts described above with respect to Figures 1 to 3 may be applied in public networks.

Every client 401, 402, 403, 404 connected to a Speedport 411, 412, 413, 414 and 415 usually gets a public IPv6 address. The client 401, 402, 403, 404 may also have a private IPv4 address, depending on client settings. In the case of usage of private IPv4 addresses, the Speedport411, 412, 413, 414 and 415 performs NAT, switching the private IP address of the client 401, 402, 403, 404 in the source to the public IPv4 address of the Speedport411, 412, 413, 414 and 415 itself.

With respect to the exemplary fixed access network 400 shown in Fig. 4, the following scenarios described above with respect to Fig. 3 may apply: For Client 1, 411: scenario 1 by usage of two public IPv6 addresses from the same pool A hosted on the BNG 3.1, 431.

For Client 2, 412: the same situation as for client1, 401, the only difference is the usage of different L2 devices MSAN2.1, 421 and MSAN2.2, 422, that does not impact scenario 1. For Client 3, 413: scenario 2 where either BNG3.1, 431 or BNG3.2, 432 is used as AAP while two public IP addresses from pool A and pool B hosted on different BNGs are used by the client 3, 403. For Client4, 404: scenario 3 where the AAP functionality in BNG3.2, 432 sees the public IP address of speedport 1.5, 415 used by the Client 4, 404. Speedport 1.5, 415 performs NAT for private IP of Client4, 404, the IP address of Client 4, 404 configured over Speedport 1.4, 414 may be used for the main transport path for the Client 4, 404.

Any of SpeedPorts 411, 412, 413, 414, 415 can also apply bonding mechanisms as described by European Patent Application EP 2 887 586 A2 "A system and a method for bonding connections of an access device". For instance, for SpeedPort 1.3, 413 both scenarios 1 and 2 apply. The public IP from MSAN2.2, 422 can be used for the main path while Speedport 1.3, 413 is also connected to two further speedports 412, 414. For the connection via Speedport 1.2, 412 no tunnel may be used since the IP of the main path and the IP over Speedport 1.2, 412 belong to the same pool A of BNG 3.1, 431. For additional path via Speedport 1.4, 414 a tunnel may be used in order to route data packets via BNG3.1, 431 selected for the AAP.

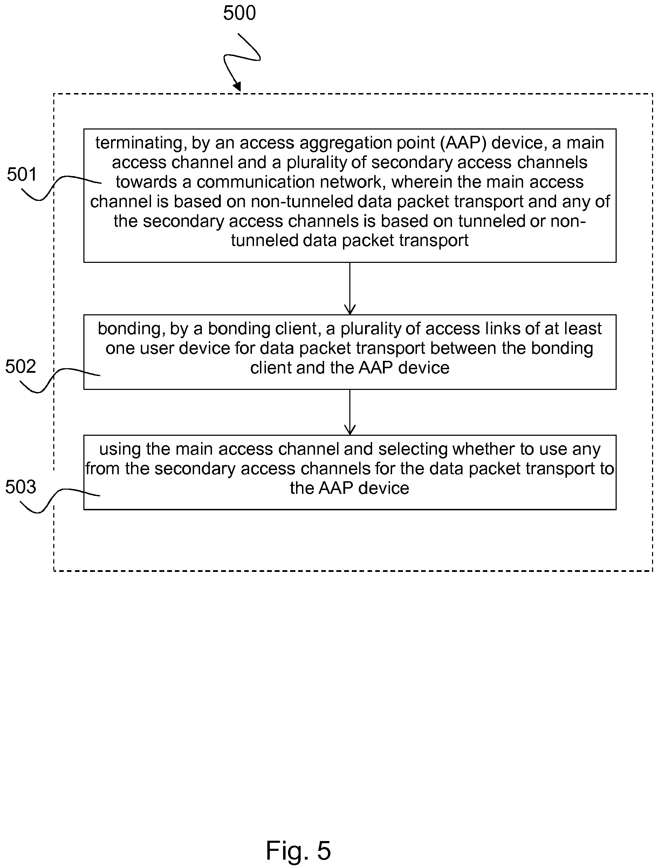

Fig. 5 shows a schematic diagram illustrating an access aggregation method 500 according to the disclosure. The method 500 includes terminating 501, by an access aggregation point (AAP) device, e.g. an AAP device 203 as described above with respect to Fig. 2, a main access channel and a plurality of secondary access channels towards a communication network, wherein the main access channel is based on non-tunneled data packet transport and any of the secondary access channels is based on tunneled or non-tunneled data packet transport, e.g. as described above with respect to Fig. 2. The method 500 further includes bonding 502, by a bonding client, e.g. a bonding client 201 as described above with respect to Fig. 2, a plurality of access links of at least one user device for data packet transport between the bonding client and the AAP device. The method 500 further includes using 503 the main access channel and selecting whether to use any from the secondary access channels for the data packet transport to the AAP device.

The method 500 may implement the functionality of the access aggregation systems and networks as described above with respect to Figures 1 to 4.

The methods, systems and devices described herein may be implemented as electrical and/or optical circuit within a chip or an integrated circuit or an application specific integrated circuit (ASIC). The invention can be implemented in digital and/or analogue electronic and optical circuitry.

The methods, systems and devices described herein may be implemented as software in a Digital Signal Processor (DSP), in a micro-controller or in any other side-processor or as hardware circuit within an application specific integrated circuit (ASIC) of a Digital Signal Processor (DSP).

The invention can be implemented in digital electronic circuitry, or in computer hardware, firmware, software, or in combinations thereof, e.g. in available hardware of conventional optical transceiver devices or in new hardware dedicated for processing the methods described herein.

The present disclosure also supports a computer program product including computer executable code or computer executable instructions that, when executed, causes at least one computer to execute the performing and computing steps described herein, in particular the method 500 as described above with respect to Fig. 5 and the techniques described above with respect to Figs. 1 to 4. Such a computer program product may include a readable non-transitory storage medium storing program code thereon for use by a computer. The program code may perform the methods and techniques as described above with respect to Figures 1 to 5.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. An access aggregation system (200), comprising:
an access aggregation point, AAP, device (203), configured to terminate a main access channel (205) and a plurality of secondary access channels (204) towards a communication network (210), wherein the AAP device (203) is configured to terminate the main access channel (204); and
a bonding client (201), configured to bond a plurality of access links (202) of at least one user device for data packet transport between the bonding client (201) and the AAP device (203), wherein the bonding client (201) is configured to use the main access channel (205) and to select whether to use any from the secondary access channels (204) for the data packet transport to the AAP device (203),
**characterized in that** the bonding client (201) is configured to establish the main access channel (205) between the bonding client (201) and the AAP device (203) that is not based on a tunnel between the bonding client (201) and the AAP device (203) before establishing the plurality of secondary access channels (204) between the bonding client (201) and the AAP device (203) that are based on a tunnel or based on no tunnel between the bonding client (201) and the AAP device (203) based on a decision if secondary channels (204) are necessary.

2. The access aggregation system (200) of claim 1,
wherein the bonding client (201) is configured to establish the secondary access channels (204) without affecting the main access channel (205).

3. The access aggregation system (200) of one of the preceding claims,
wherein the bonding client (201) is configured to switch between non-bundling mode in which only the main access channel (205) is established and bundling mode in which at least one of the secondary access channels (204) is additionally established.

4. The access aggregation system (200) of claim 3,
wherein the bonding client (201) is configured to establish in the non-bundling mode only the main access channel (205) for non-tunneled data packet transport.

5. The access aggregation system (200) of one of the preceding claims,
wherein the bonding client (201) is configured to select the main access channel (205) and whether to establish any from the secondary access channels (204) based on an AAP discovery process.

6. The access aggregation system (200) of claim 5, wherein the bonding client (201) is configured to:
transmit a plurality of AAP discovery messages over a plurality of network links towards the AAP device (203),
receive a plurality of AAP reply messages in response to the transmitted AAP discovery messages, and
select the main access channel (205) and whether to use any from the secondary access channels (204) based on information comprised in at least one of the received AAP reply messages.

7. The access aggregation system (200) of claim 6, wherein each of the AAP discovery messages comprises:
an identifier of the bonding client (201),
a network address of the bonding client (201), and
a unique identifier of the network link via which the respective AAP discovery message is transmitted.

8. The access aggregation system (200) of claim 7, wherein the AAP device (203) is configured to:
receive at least one of the AAP discovery messages transmitted by the bonding client (201), and
transmit an AAP reply message to the bonding client (201), wherein the AAP reply message comprises the identifier of the bonding client (201), a data structure comprising information about the at least one AAP discovery message received by the AAP device (203) and an identifier of the AAP device (203).

9. The access aggregation system (300) of one of the preceding claims, comprising:
a first access network (311) coupled via a first access link (L1) to the bonding client (201, 301);
a second access network (312) coupled via a second access link (L2) to the bonding client (201, 301); and
a transport network (321) connecting the first access network (311) and the second access network (312) to the communication network (331), wherein data packets sent from the bonding client (201, 301) towards the communication network (331) traverse the AAP device (203).

10. The access aggregation system (300) of claim 9,
wherein the AAP device (203) is configured to forward IP packets received via the main access channel (205) based on their source IP address without any modifications of packet content and to forward IP packets received via one of the secondary access channels (204) based on network address translation, NAT, applied to their source IP address.

11. The access aggregation system (300) of claim 9 or 10, comprising:
a third access network (313) coupled via a fourth access link (L4) to a second bonding client (302);
a second transport network (322) connecting the third access network (313) to the communication network (331),
wherein the second bonding client (302) is configured to change a route of data packets sent by the second bonding client (302) towards the communication network (331) such that data packets which are not traversing the AAP device (203) are changed in data packets traversing the AAP device (203).

12. A bonding client (201), comprising:
a plurality of access links (202) towards at least one user device for data packet transport;
a network interface towards an access aggregation point, AAP, device (203) configured to terminate a main access channel (205) and a plurality of secondary access channels (204) towards a communication network (210),; and
a processor, configured to bond the plurality of access links (202) for data packet transport between the bonding client (201) and the AAP device (203) via the network interface, wherein the processor is configured to use the main access channel (205) and to select whether to use any from the secondary access channels (204) for the data packet transport to the AAP device (203),
**characterized in that** the bonding client (201) is configured to establish the main access channel (205) between the bonding client (201) and the AAP device (203) that is not based on a tunnel between the bonding client (201) and the AAP device (203) before establishing the plurality of secondary access channels (204) between the bonding client (201) and the AAP device (203) that are based on a tunnel or based on no tunnel between the bonding client (201) and the AAP device (203) based on a decision if secondary channels (204) are necessary.

13. An access aggregation method (500), comprising:
terminating (501), by an access aggregation point, AAP, device (203), a main access channel and a plurality of secondary access channels towards a communication network;
bonding (502), by a bonding client (201), a plurality of access links of at least one user device for data packet transport between the bonding client and the AAP device, and
using (503) the main access channel and selecting whether to use any from the secondary access channels for the data packet transport to the AAP device;
**characterized by**:
establishing the main access channel (205) between the bonding client (201) and the AAP device (203) that is not based on a tunnel between the bonding client (201) and the AAP device (203) before establishing the plurality of secondary access channels (204) between the bonding client (201) and the AAP device (203) that are based on a tunnel or based on no tunnel between the bonding client (201) and the AAP device (203) based on a decision if secondary channels (204) are necessary.

## Patentansprüche

1. Zugangsaggregationssystem (200), aufweisend:
eine Zugangsaggregationspunkt-, AAP, Vorrichtung (203), die konfiguriert ist, einen Hauptzugangskanal (205) und mehrere sekundäre Zugangskanäle (204) hin zu einem Kommunikationsnetzwerk (210) zu beenden, wobei die AAP-Vorrichtung (203) konfiguriert ist, den Hauptzugangskanal (204) zu beenden; und
einen Verbindungs-Client (201), der konfiguriert ist, mehrere Zugangslinks (202) mindestens einer Anwendervorrichtung für Datenpakettransport zwischen dem Verbindungs-Client (201) und der AAP-Vorrichtung (203) zu verbinden, wobei der Verbindungs-Client (201) konfiguriert ist, den Hauptzugangskanal (205) zu verwenden und auszuwählen, ob einer der sekundären Zugangskanäle (204) für den Datenpakettransport an die AAP-Vorrichtung (203) zu verwenden ist,
**dadurch gekennzeichnet, dass** der Verbindungs-Client (201) konfiguriert ist, den Hauptzugangskanal (205) zwischen dem Verbindungs-Client (201) und der AAP-Vorrichtung (203) einzurichten, der nicht auf einem Tunnel zwischen dem Verbindungs-Client (201) und der AAP-Vorrichtung (203) basiert, bevor die mehreren sekundären Zugangskanäle (204) zwischen dem Verbindungs-Client (201) und der AAP-Vorrichtung (203) eingerichtet werden, die auf einem Tunnel basieren oder auf keinem Tunnel zwischen dem Verbindungs-Client (201) und der AAP-Vorrichtung (203) basieren, basierend auf einer Entscheidung, ob sekundäre Kanäle (204) notwendig sind.

2. Zugangsaggregationssystem (200) nach Anspruch 1, wobei der Verbindungs-Client (201) konfiguriert ist, die sekundären Zugangskanäle (204) einzurichten, ohne den Hauptzugangskanal (205) zu beeinträchtigen.

3. Zugangsaggregationssystem (200) nach einem der vorangehenden Ansprüche,
wobei der Verbindungs-Client (201) konfiguriert ist, zwischen Nicht-Bündelungsmodus, in dem nur der Hauptzugangskanal (205) eingerichtet ist, und Bündelungsmodus, in dem mindestens einer der sekundären Zugangskanäle (204) zusätzlich eingerichtet ist, zu wechseln.

4. Zugangsaggregationssystem (200) nach Anspruch 3, wobei der Verbindungs-Client (201) konfiguriert ist, im Nicht-Bündelungsmodus nur den Hauptzugangskanal (205) für nicht getunnelten Datenpakettransport einzurichten.

5. Zugangsaggregationssystem (200) nach einem der vorangehenden Ansprüche,
wobei der Verbindungs-Client (201) konfiguriert ist, den Hauptzugangskanal (205) und ob einer der sekundären Zugangskanäle (204) einzurichten ist, basierend auf einem AAP-Feststellungsprozess auszuwählen.

6. Zugangsaggregationssystem (200) nach Anspruch 5, wobei der Verbindungs-Client (201) konfiguriert ist, zum:
Senden mehrerer AAP-Feststellungsnachrichten über mehrere Netzwerklinks an die AAP-Vorrichtung (203),
Empfangen mehrerer AAP-Antwortnachrichten in Antwort auf die gesendeten AAP-Feststellungsnachrichten, und
Auswählen des Hauptzugangskanals (205) und ob irgendeiner der sekundären Zugangskanäle (204) zu verwenden ist, basierend auf Informationen, die in mindestens einer der empfangenen AAP-Antwortnachrichten aufgewiesen sind.

7. Zugangsaggregationssystem (200) nach Anspruch 6, wobei jede der AAP-Feststellungsnachrichten aufweist:
eine Kennung des Verbindungs-Clients (201),
eine Netzwerkadresse des Verbindungs-Clients (201) und
eine einzigartige Kennung des Netzwerklinks, über den die jeweilige AAP-Feststellungsnachricht gesendet wird.

8. Zugangsaggregationssystem (200) nach Anspruch 7, wobei die AAP-Vorrichtung (203) konfiguriert ist, zum:
Empfangen mindestens einer der AAP-Feststellungsnachrichten, die durch den Verbindungs-Client (201) gesendet werden, und
Senden einer AAP-Antwortnachricht an den Verbindungs-Client (201), wobei die AAP-Antwortnachricht die Kennung des Verbindungs-Clients (201), eine Datenstruktur, die Informationen über die mindestens eine AAP-Feststellungsnachricht aufweist, die von der AAP-Vorrichtung (203) empfangen wird, und eine Kennung der AAP-Vorrichtung (203) aufweist.

9. Zugangsaggregationssystem (300) nach einem der vorstehenden Ansprüche, aufweisend:
ein erstes Zugangsnetzwerk (311), das über einen ersten Zugangslink (L1) mit dem Verbindungs-Client (201, 301) gekoppelt ist;
ein zweites Zugangsnetzwerk (312), das über einen zweiten Zugangslink (L2) mit dem Verbindungs-Client (201, 301) gekoppelt ist; und
ein Transportnetzwerk (321), das das erste Zugangsnetzwerk (311) und das zweite Zugangsnetzwerk (312) mit dem Kommunikationsnetzwerk (331) verbindet, wobei Datenpakete, die vom Verbindungs-Client (201, 301) hin zum Kommunikationsnetzwerk (331) gesendet werden, die AAP-Vorrichtung (203) queren.

10. Zugangsaggregationssystem (300) nach Anspruch 9, wobei die AAP-Vorrichtung (203) konfiguriert ist, IP-Pakete, die über den Hauptzugangskanal (205) empfangen werden, basierend auf deren Quell-IP-Adresse ohne irgendwelche Modifikationen des Paketinhalts weiterzuleiten und IP-Pakete, die über einen der sekundären Zugangskanäle (204) empfangen werden, basierend auf Netzwerkadressübersetzung, NAT, die auf deren Quell-IP-Adresse angewendet wird, weiterzuleiten.

11. Zugangsaggregationssystem (300) nach Anspruch 9 oder 10, aufweisend:
ein drittes Zugangsnetzwerk (313), das über einen vierten Zugangslink (L4) mit einem zweiten Verbindungs-Client (302) gekoppelt ist;
ein zweites Transportnetzwerk (322), das das dritte Zugangsnetzwerk (313) mit dem Kommunikationsnetzwerk (331) verbindet,
wobei der zweite Verbindungs-Client (302) konfiguriert ist, eine Route von Datenpaketen, die durch den zweiten Verbindungs-Client (302) hin zum Kommunikationsnetzwerk (331) gesendet werden, derart zu ändern, dass Datenpakete, die nicht die AAP-Vorrichtung (203) queren, in Datenpakete geändert werden, die die AAP-Vorrichtung (203) queren.

12. Verbindungs-Client (201), aufweisend:
mehrere Zugangslinks (202) hin zu mindestens einer Anwendervorrichtung für Datenpakettransport;
eine Netzwerkschnittstelle hin zu einer Zugangsaggregationspunkt-, AAP, Vorrichtung (203), die konfiguriert ist, einen Hauptzugangskanal (205) und mehrere sekundäre Zugangskanäle (204) hin zu einem Kommunikationsnetzwerk (210) zu beenden, und
einen Prozessor, der konfiguriert ist, die mehreren Zugangslinks (202) für Datenpakettransport zwischen dem Verbindungs-Client (201) und der AAP-Vorrichtung (203) über die Netzwerkschnittstelle zu verbinden, wobei der Prozessor konfiguriert ist, den Hauptzugangskanal (205) zu verwenden und auszuwählen, ob einer der sekundären Zugangskanäle (204) für den Datenpakettransport an die AAP-Vorrichtung (203) zu verwenden ist,
**dadurch gekennzeichnet, dass** der Verbindungs-Client (201) konfiguriert ist, den Hauptzugangskanal (205) zwischen dem Verbindungs-Client (201) und der AAP-Vorrichtung (203) einzurichten, der nicht auf einem Tunnel zwischen dem Verbindungs-Client (201) und der AAP-Vorrichtung (203) basiert, bevor die mehreren sekundären Zugangskanäle (204) zwischen dem Verbindungs-Client (201) und der AAP-Vorrichtung (203) eingerichtet werden, die auf einem Tunnel basieren oder auf keinem Tunnel zwischen dem Verbindungs-Client (201) und der AAP-Vorrichtung (203) basieren, basierend auf einer Entscheidung, ob sekundäre Kanäle (204) notwendig sind.

13. Zugangsaggregationsverfahren (500), aufweisend:
Beenden (501), durch eine Zugangsaggregationspunkt-, AAP, Vorrichtung (203), eines Hauptzugangskanals und mehrerer sekundärer Zugangskanäle hin zu einem Kommunikationsnetzwerk;
Verbinden (502), durch einen Verbindungs-Client (201), mehrerer Zugangslinks von mindestens einer Anwendervorrichtung für Datenpakettransport zwischen dem Verbindungs-Client und der AAP-Vorrichtung, und
Verwenden (503) des Hauptzugangskanals und Auswählen, ob einer der sekundären Zugangskanäle für den Datenpakettransport an die AAP-Vorrichtung zu verwenden ist;
**gekennzeichnet durch**:
Einrichten des Hauptzugangskanals (205) zwischen dem Verbindungs-Client (201) und der AAP-Vorrichtung (203), der nicht auf einem Tunnel zwischen dem Verbindungs-Client (201) und der AAP-Vorrichtung (203) basiert, bevor die mehreren sekundären Zugangskanäle (204) zwischen dem Verbindungs-Client (201) und der AAP-Vorrichtung (203) eingerichtet werden, die auf einem Tunnel basieren oder auf keinem Tunnel zwischen dem Verbindungs-Client (201) und der AAP-Vorrichtung (203) basieren, basierend auf einer Entscheidung, ob sekundäre Kanäle (204) notwendig sind.

## Revendications

1. Système de regroupement d'accès (200), comprenant :
un dispositif (203) de point de regroupement d'accès, AAP (access aggregation point), configuré pour terminer un canal d'accès principal (205) et une pluralité de canaux d'accès secondaires (204) vers un réseau de communication (210), dans lequel le dispositif AAP (203) est configuré pour terminer le canal d'accès principal (204) ; et
un client de liaison (201) configuré pour lier une pluralité de liaisons d'accès (202) d'au moins un dispositif utilisateur pour le transport de paquets de données entre le client de liaison (201) et le dispositif AAP (203), dans lequel le client de liaison (201) est configuré pour utiliser le canal d'accès principal (205) et pour choisir d'utiliser ou non l'un des canaux d'accès secondaires (204) pour le transport de paquets de données vers le dispositif AAP (203),
**caractérisé en ce que** le client de liaison (201) est configuré pour établir le canal d'accès principal (205) entre le client de liaison (201) et le dispositif AAP (203) qui n'est pas basé sur un tunnel entre le client de liaison (201) et le dispositif AAP (203) avant d'établir la pluralité de canaux d'accès secondaires (204) entre le client de liaison (201) et le dispositif AAP (203) basés sur un tunnel ou sur l'absence de tunnel entre le client de liaison (201) et le dispositif AAP (203) sur la base d'une décision concernant la nécessité des canaux secondaires (204).

2. Système de regroupement d'accès (200) selon la revendication 1,
dans lequel le client de liaison (201) est configuré pour établir les canaux d'accès secondaires (204) sans affecter le canal d'accès principal (205).

3. Système de regroupement d'accès (200) selon l'une des revendications précédentes,
dans lequel le client de liaison (201) est configuré pour basculer entre un mode sans regroupement dans lequel seul le canal d'accès principal (205) est établi et un mode de regroupement dans lequel au moins un des canaux d'accès secondaires (204) est en outre établi.

4. Système de regroupement d'accès (200) selon la revendication 3,
dans lequel le client de liaison (201) est configuré pour établir dans le mode sans regroupement uniquement le canal d'accès principal (205) pour le transport de paquets de données sans tunnel.

5. Système de regroupement d'accès (200) selon l'une des revendications précédentes,
dans lequel le client de liaison (201) est configuré pour sélectionner le canal d'accès principal (205) et décider s'il faut établir l'un quelconque des canaux d'accès secondaires (204) sur la base d'un processus de découverte AAP.

6. Système de regroupement d'accès (200) selon la revendication 5, dans lequel le client de liaison (201) est configuré pour :
transmettre une pluralité de messages de découverte AAP sur une pluralité de liaisons de réseau vers le dispositif AAP (203),
recevoir une pluralité de messages de réponse AAP en réponse aux messages de découverte AAP transmis, et
sélectionner le canal d'accès principal (205) et indiquer s'il convient d'utiliser l'un des canaux d'accès secondaires (204) en fonction d'informations comprises dans au moins un des messages de réponse AAP reçus.

7. Système de regroupement d'accès (200) selon la revendication 6, dans lequel chacun des messages de découverte AAP comprend :
un identifiant du client de liaison (201),
une adresse réseau du client de liaison (201), et
un identifiant unique de liaison en réseau par lequel le message de découverte AAP respectif est transmis.

8. Système de regroupement d'accès (200) selon la revendication 7, dans lequel le dispositif AAP (203) est configuré pour :
recevoir au moins l'un des messages de découverte AAP transmis par le client de liaison (201), et
transmettre un message de réponse AAP au client de liaison (201), le message de réponse AAP comprenant l'identifiant du client de la liaison (201), une structure de données comprenant des informations concernant le ou les messages de découverte AAP reçus par le dispositif AAP (203) et un identifiant du dispositif AAP (203).

9. Système de regroupement d'accès (300) selon l'une des revendications précédentes, comprenant :
un premier réseau d'accès (311) couplé par une première liaison d'accès (L1) au client de liaison (201, 301) ;
un second réseau d'accès (312) couplé par une seconde liaison d'accès (L2) au client de liaison (201, 301) ; et
un réseau de transport (321) connectant le premier réseau d'accès (311) et le second réseau d'accès (312) au réseau de communication (331), dans lequel les paquets de données envoyés depuis le client de liaison (201, 301) vers le réseau de communication (331) traversent le dispositif AAP (203).

10. Système de regroupement d'accès (300) selon la revendication 9,
dans lequel le dispositif AAP (203) est configuré pour transférer les paquets IP reçus par le canal d'accès principal (205) en fonction de leur adresse IP source sans aucune modification du contenu du paquet et pour transférer les paquets IP reçus par l'un des canaux d'accès secondaires (204) en fonction de la conversion d'adresse réseau, NAT (network address translation), appliquée à leur adresse IP source.

11. Système de regroupement d'accès (300) selon la revendication 9 ou 10, comprenant :
un troisième réseau d'accès (313) couplé par une quatrième liaison d'accès (L4) à un second client de liaison (302) ;
un second réseau de transport (322) connectant le troisième réseau d'accès (313) au réseau de communication (331),
dans lequel le second client de liaison (302) est configuré pour modifier un itinéraire de paquets de données envoyés par le second client de liaison (302) vers le réseau de communication (331) de telle sorte que les paquets de données qui ne traversent pas le dispositif AAP (203) soient changés en paquets de données traversant le dispositif AAP (203).

12. Client de liaison (201) comprenant :
une pluralité de liaisons d'accès (202) vers au moins un dispositif utilisateur pour le transport de paquets de données ;
une interface réseau vers un dispositif (203) de point de regroupement d'accès, AAP, configuré pour terminer un canal d'accès principal (205) et une pluralité de canaux d'accès secondaires (204) vers un réseau de communication (210), et
un processeur configuré pour lier la pluralité de liaisons d'accès (202) pour le transport de paquets de données entre le client de liaison (201) et le dispositif AAP (203) par l'interface réseau, dans lequel le processeur est configuré pour utiliser le canal d'accès principal (205) et pour choisir d'utiliser ou non l'un des canaux d'accès secondaires (204) pour le transport de paquets de données vers le dispositif AAP (203),
**caractérisé en ce que** le client de liaison (201) est configuré pour établir le canal d'accès principal (205) entre le client de liaison (201) et le dispositif AAP (203) qui n'est pas basé sur un tunnel entre le client de liaison (201) et le dispositif AAP (203) avant d'établir la pluralité de canaux d'accès secondaires (204) entre le client de liaison (201) et le dispositif AAP (203) basés sur un tunnel ou sur l'absence de tunnel entre le client de liaison (201) et le dispositif AAP (203) sur la base d'une décision concernant la nécessité des canaux secondaires (204).

13. Procédé de regroupement d'accès (500), comprenant les étapes consistant à :
terminer (501), par un dispositif (203) de point de regroupement d'accès, AAP, un canal d'accès principal et une pluralité de canaux d'accès secondaires vers un réseau de communication ;
établir la liaison (502), par un client de liaison (201), d'une pluralité de liaisons d'accès d'au moins un dispositif utilisateur pour le transport de paquets de données entre le client de liaison et le dispositif AAP, et
utiliser (503) le canal d'accès principal et sélectionner s'il faut utiliser l'un quelconque des canaux d'accès secondaires pour le transport de paquets de données vers le dispositif AAP ;
**caractérisé par** les étapes consistant à :
établir le canal d'accès principal (205) entre le client de liaison (201) et le dispositif AAP (203) qui n'est pas basé sur un tunnel entre le client de liaison (201) et le dispositif AAP (203) avant d'établir la pluralité de canaux d'accès secondaires (204) entre le client de liaison (201) et le dispositif AAP (203) qui sont basés sur un tunnel ou sur l'absence de tunnel entre le client de liaison (201) et le dispositif AAP (203) en fonction d'une décision concernant la nécessité des canaux secondaires (204).
